(19) Europäisches Patentamt
European Patent Office
Office européen des brevets

(11) **EP 2 842 182 B1**

(12) **EUROPEAN PATENT SPECIFICATION**

(45) Date of publication and mention
of the grant of the patent:
**07.11.2018 Bulletin 2018/45**

(21) Application number: **13706957.1**

(22) Date of filing: **22.02.2013**

(51) Int Cl.:
*H01M 2/16* (2006.01)       *C08L 1/00* (2006.01)
*D21H 11/00* (2006.01)      *D01F 2/00* (2006.01)
*H01M 10/24* (2006.01)     *C08L 1/02* (2006.01)
*C08L 5/14* (2006.01)        *D21H 11/16* (2006.01)
*D21H 13/08* (2006.01)

(86) International application number:
**PCT/EP2013/053579**

(87) International publication number:
**WO 2013/159948 (31.10.2013 Gazette 2013/44)**

(54) **BATTERY SEPARATOR**

BATTERIETRENNER

SÉPARATEUR DE BATTERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.04.2012 EP 12165714**

(43) Date of publication of application:
**04.03.2015 Bulletin 2015/10**

(73) Proprietor: **Lenzing Aktiengesellschaft
4860 Lenzing (AT)**

(72) Inventors:
• **GALLO, Marco
A-4840 Vöcklabruck (AT)**
• **SLATER, Peter Andrew
Nuneaton
Warwickshire CV11 6JR (GB)**
• **POTTER, Chris
Little Eaton
Derby DE21 5D (GB)**

(74) Representative: **Schwarz & Partner Patentanwälte
OG
Patentanwälte
Wipplingerstraße 30
1010 Wien (AT)**

(56) References cited:
**EP-A1- 0 572 921        WO-A1-99/16960
WO-A1-2005/118950   US-A1- 2006 014 080**

## Description

The present invention relates to the field of batteries, including alkaline (primary and secondary) and lithium batteries, which include separators comprising a porous layer including polymeric fibres.

Such separators serve to prevent an electrical connection between the anode and the cathode of the battery, or a short circuit.

Cellulosic fibres are widely employed in battery separators due to their ability to absorb and retain the electrolytes. However, some of these cellulosic fibres (like rayon or mercerized pulp) have poor fibrillation ability and, therefore, do not allow obtaining battery separators with the desired properties in terms of density, porosity and dimensional stability.

Cellulosic fibres of the lyocell genus are well known for their fibrillation ability and are employed in battery separators. Lyocell fibres are spun from a solution of cellulose in a tertiary amine-oxide.

Thanks to the fine and long fibrils, the separators made with such fibres have a suitable porosity, the ions mobility inside the battery is very good and the efficiency of the battery is high. The fibrils interlace very well during paper making and form a dense structure with low shrinkage and high dimensional stability. Moreover the average size of the pores is small, and this represents a barrier for dendrites.

The use of lyocell fibres in battery separators has been disclosed in EP 0 572 921 A1, US 2007/0014080 A1, US 2010/0310921 and US 2009/0017385 A1. WO 97/37392 discloses a battery separator made from a cellulose film formed from a solution of cellulose in an amine oxide. Further state of the art is provided by US 5,700,700 and DE 198 55 644.

Especially in the case of alkaline batteries, the battery separator is required to have good chemical stability in the presence of strong electrolytes (such as 30-40% KOH). Further details about the requirements of battery separators in various types of batteries are disclosed in e.g. WO 2007/041312.

It is still desired to make battery separators with cellulosic fibres having an enhanced resistance towards alkali solutions.

Accordingly, in one aspect the present invention provides a battery separator, comprising cellulosic fibres of the lyocell genus, wherein the R10-value, the R18-value and the hemicellulose content of the lyocell fibres is as follows:

R10 > 83%, preferably > 84%
R18 > 93%, preferably > 94%
Hemicellulose content < 3%.

In a further aspect, the present invention provides the use of a cellulosic fibre of the lyocell genus, said fibre exhibiting

- a value for R10 > 83%, preferably > 84%
- a value for R18 > 93%, preferably > 94%
- a hemicellulose content < 3%,

in a battery separator.

The present invention, furthermore, provides a cellulosic fibre of the lyocell genus, said fibre exhibiting

- a value for R10 > 83%, preferably > 84%
- a value for R18 > 93%, preferably > 94%
- a hemicellulose content < 3% and
- a length of from 2 to 10 mm.

Finally, the present invention provides a battery, preferably an alkaline battery, comprising the battery separator according to the present invention.

Short description of the drawings

Figures 1 and 2 demonstrate the Alkali Resistance (Figure 1) and Air Permeability (Figure 2) properties of battery separators according to the present invention and comparative examples.
Figures 3 to 6 demonstrate the effect of the mercerisation of lyocell fibres on alkali resistance in terms of R10-value (Figures 3 and 5) and R18-value (Figures 4 and 6).
Figure 7 shows the results of a Schopper-Riegler test on non-mercerised and mercerised lyocell fibre.

Detailed description of the invention

It has surprisingly been found that lyocell fibres with a certain set of properties, i.e. R10-value, R18-value and hemicellulose content, exhibit a much better resistance to electrolytes of especially alkaline batteries than standard lyocell fibres hitherto proposed for battery separators.

As known to the skilled artisan, the R10-value of a cellulosic substrate is the amount of undissolved residue when exposing the substrate to 10% NaOH. R18 reflects the amount of undissolved residue when exposing the substrate to 18% NaOH. Both values can be measured according to DIN 54355.

All values given within this application for R10, R18 and hemicellulose content are wt.%.

The content of hemicellulose is understood to be the sum of xylane and mannane. The method for determining the content of hemicellulose is set out further below.

When producing battery separators comprising lyocell fibres meeting the above specifications, it was found that the Reduction by Weight of the separator in 40% KOH was significantly reduced.

Furthermore, separators containing the above-specified lyocell fibres have lower Reduction by Area in 40% KOH compared to separators containing other cellulosic fibres.

Lyocell fibres with the above-specified properties have also a high degree of fibrillation when they are refined with the conventional beating systems. For example, the Canadian Standard Freeness (CSF) of the refined fibres is below 700ml, or preferably below 500 ml.

The alkali resistance of battery separators was further enhanced when employing lyocell fibres wherein the R10-value, the R18-value and the hemicellulose content of the lyocell fibres is as follows:

R10 > 89%
R18 > 97%
Hemicellulose content < 2%.

Such lyocell fibres showed excellent alkali resistance, thus they were particularly suitable to make separators with extremely low Reduction by Weight in KOH. Nevertheless Lyocell fibres having extremely high R18- and R10-values and extremely low hemicellulose content are more difficult to beat. Thus, it is more difficult to obtain fine fibrils that are suitable for making separators with low shrinkage in KOH and suitable porosity.

The battery separator according to the present invention may comprise a mixture of lyocell fibres exhibiting the R10-values, R18-values and hemicellulose content as set out above.

In an especially preferred embodiment of the present invention, the lyocell fibres are mercerised.

Mercerising cellulosic fibres is well-known in the textile industry for modifying yarns and fabric properties and achieve special performances. In short, mercerising means the treatment of the fibre, yarn or fabric with an alkaline solution, especially NaOH-solution. The effects of mercerisation on the fibre structure of, inter alia, lyocell fibres have, inter alia, been discussed in Stana-Kleinschek et al., Correlation of regenerated cellulose fibres morphology and surface free energy components, Lenzinger Berichte 82 (2003), 83-95 and Colom, X., Carrillo, F., Crystallinity changes in lyocell and viscose-type fibres by caustic treatment, Europ. Polymer J. 38 (2002), 2225-2230. Mercerisation of fabrics containing lyocell fibre is disclosed in WO 95/024524 A1.

It has been found that mercerised pulp (which is a cellulosic fibre, but not a man-made cellulosic fibre that has been spun from a cellulose-containing solution, like lyocell fibre) exhibits high alkali resistance when used in a battery separator, but exhibits a poor fibrillation ability (cf. US 7,781,104 B2). Apparently, the mercerisation treatment performed on the pulp negatively influences the fibrillation ability of the pulp.

In contrast therto, it has been found that mercerised lyocell fibres not only exhibit high alkali resistance when used in a battery separator, but also high fibrillation ability.

The R10-value and the R18-value of the mercerised lyocell fibres employed according to this preferred embodiment of the invention is preferably as follows:

R10 > 87%, preferably > 93%
R18 > 95%, preferably > 98%.

It has been found that in spite of these very high R10- and R18-values, the lyocell fibres not only exhibit excellent alkali resistance, but still show good fibrillation ability during the refining process.

The amount of the lyocell fibres fulfilling the above requirements in the separator may range from 1% to 100%, preferably 15% or more, 25% or more, 40% or more, or 50% or more.

The separator may comprise other constituents known to the skilled artisan, such as PVA fibres and PVA binders, pulp, viscose fibres or also lyocell fibres that do not fulfil the requirements regarding R10-value, R18-value and hemicellulose content.

The separator may be of any known design, such as a monolayer or multi-layer design. In multi-layer structures at least one layer should be a nonwoven layer.

In such embodiments, there may be one or more additional layer(s) which can be selected from the group consisting of nonwovens or microporous layers (films), for example cellophane, PVA, polyamide, polyester or polyolefins.

In some embodiments the layers may be glued or thermally bonded together. Each layer may be coated with particles (like inorganic particles), may be grafted, treated with surfactants or corona treated. This kind of treatment may be symmetrical or asymmetrical, as described in US2012/028103A1.

Moreover the separator may include functional substances that have an "ions-trapping" function. They can selectively block molecules that reduce the battery performance (US2011/0117413A1).

It was found that battery separators comprising the lyocell fibres fulfilling the requirements according to the present invention exhibit advantageous properties, such as

- A Reduction by Weight in KOH of < 6.0%, preferably 5.5% or less, more preferably 5% or less, most preferably 4% or less
- A Reduction by Area in KOH of < 4.5%, preferably 3.5% or less, most preferably 2% or less and/or
- A Frazier Air Permeability of < 50 $cm^3/cm^2/s$, preferably 20 $cm^3/cm^2/s$, most preferred from 3.5 $cm^3/cm^2/s$ to 15 $cm^3/cm^2/s$.

In the case of mercerised lyocell fibres, even more preferable properties in terms of Reduction by Weight in KOH and Reduction by Area in KOH can be obtained, such as

- A Reduction by Weight in KOH of < 3.5%, preferably 2.5% or less
- A Reduction by Area in KOH of < 3.0%, preferably 1.0% or less.

The lyocell fibres to be employed according to the present invention may exhibit a titre in the range of 0.2-10 dtex, preferably 0.2-2 dtex. The length of the fibres may be in the range of 1-20 mm, preferably 2-10 mm. The diameter of the fibrils after refining the fibres may be between 50 nm and 10.000 nm.

A lyocell fibre fulfilling the requirements according to the present invention and exhibiting a length of from 2 to 10 mm has not been proposed before.

Lyocell fibres fulfilling the requirements according to the present invention can be made from cellulosic starting materials, especially pulps or pulp mixtures, having corresponding properties in terms of R10-value, R18-value and hemicellulose content.

Thus, for making the lyocell fibres to be employed according to the present invention

- All components of the cellulosic starting material should exhibit

  R18>94%,
  R10>85% and
  Hemicellulose < 3%

- At least 50% in weight of the cellulosic starting material should exhibit

  R18>96%,
  R10>90% and
  Hemicellulose < 3%.

In order to produce lyocell fibres with a very high R10- and R18-value, at least 50% in weight of the cellulosic starting material should exhibit

  R18>98%,
  R10>97% and
  Hemicellulose<1 %

Pulps fulfilling the above requirements are commercially available and/or can be produced by the skilled artisan according to the respective needs of the production, see for example US 2009/0312536 A1 or WO 2005/118950.

The cellulosic starting material may also include cotton linters.

Alternatively, lyocell fibres exhibiting the R10-values, R18-values according to the present invention can also be obtained by mercerising lyocell fibre.

Typically, mercerisation is carried out with a NaOH-solution. The concentration of NaOH in the solution may preferably be from 5 wt.% to 20 wt.%. The duration of the treatment (residential time of the fibres in the treatment bath) may preferably be from 120 to 480 seconds.

Mercerisation may be carried out within the fibre production line just before the cutting step, where the fibres are still in the form of continuous filaments called "tow". Alternatively, mercerisation may be carried out in the fibre production line after cutting, when the fibres are already in the form of "staple" or "short cut" fibre. Of course, mercerisation can also be carried out off-line.

The mercerisation can be applied to any type of lyocell fibres, independently from the pulp types or other conditions used for the production of the fibres. If as the starting material for mercerisation lyocell fibres are employed the R10- and R18-values of which are already high, notably where the R10- and R18-values already meet the requirements of the present invention (because they have been made from a pulp as specified above), excellent results can be obtained.

Examples

Test Methods

Test Method for determining hemicellulose content

Principle: Two step sulphuric acid hydrolysis followed by quantification of the obtained monosaccharides by anion exchange chromatography.

Procedure:

Hydrolysis:

About 50 mg of the sample is placed in a culture-C-tube (Wheaton) equipped with a small magnetic stirrer. Then 0.5 ml of 72.3% sulphuric acid is added under vigorous stirring and the reaction tube is closed. The mixture is kept at room temperature for 3 hours with frequent stirring to properly dissolve the sample.

For the second hydrolysis step 8.5 ml water is added and the reaction vessel is placed into a heating block and heated to 110°C for 90 min.

The sample solution is cooled, filtered (0.45 $\mu$m), diluted 50-fold and neutralized with sodium hydroxide

Chromatography:

Column: Dionex CarboPac PA10 4*50 + 4*250 mm
Eluent A: MilliQ water
Eluent B: 0,35 M sodium hydroxide
Flow Rate: 1 ml/min
Temperature: ambient
Injection volume: 20 $\mu$l
Post column reagent: 0,35 M sodium hydroxide (0,8 ml/min)
Detection: pulsed amperometric detection (Dionex ED40)
Run time: 51 min

Gradient Program

| Time [min] | Eluent A [%] | Eluent B [%] | Comment |
|---|---|---|---|
| 0.0 | 100 | 0 | separation |
| 33.5 | 100 | 0 | |
| 34.0 | 0 | 100 | regeneration |
| 36.0 | 0 | 100 | |

(continued)

| Time [min] | Eluent A [%] | Eluent B [%] | Comment |
|---|---|---|---|
| 36,5 | 100 | 0 | conditioning |
| 51 | 100 | 0 | end |

However, chromatography can also be carried out with other anion exchange columns with equivalent results.

The evaluation and quantification of the results of the chromatography is well-known to the skilled artisan.

Tests on Paper:

Basis Weight

Measured according to EDANA standard WSP130.1

Thickness

Measured according to ASTM D1777

Density

Calculated: Density $(g/cm^3)$ = (Basis Weight $[g/m^2]$ / 10000) / (Thickness $[\mu m]$ / 10000)

Alkali Proof (Area shrinkage rate in KOH)

Procedure:

- cut a square sheet 120mm x 120 mm (A1). Cut carefully the specimen where the paper is uniform.
- immerse it in 40% KOH solution at 70°C.
- keep in the bath for 8 hours
- measure the area of the wet sample (A2)

$$\text{Area shrinkage rate } (\%) = (A1-A2)/A1 \times 100$$

Alkali Proof (Weight reduction rate in KOH)

Procedure:

- cut one or more pieces of separator with a weight of approximately 5g
- dry the sample at 80°C for 1 hour
- weigh the dried sample (W1)
- immerse it in 40% KOH solution at 70°C.
- keep in the bath for 8 hours
- wash the sample with water
- dry the sample at 80°C for 1 hour
- weigh the dried sample (W2)

$$\text{Weight reduction rate } (\%) = (W1-W2)/W1 \times 100$$

Frazier Air Permeability

Air permeability was measures according to JIS 1096-6,27.

The differential pressure of the air flow passing through the material was 1.27 cm (0.5 inches) of water.

Porosity

It was calculated dividing the paper basis weight (g/m$^2$) by the polymer density (g/cm$^3$) and by the paper thickness ($\mu$m), multiplying by 100 and finally subtracting the result by 100.

$$\text{Porosity } (\%) = 100 - (\text{basis weight} / [\text{density x thickness}] \text{ x } 100)$$

Manufacture of lyocell fibres

Lyocell fibres were manufactured according to methods known as such to the skilled artisan from different pulps. The properties of the pulps employed, their respective amount in the fibre produced therefrom, and the properties of the resulting fibres are listed in the following table:

Table 1:

| Pulp type | | ref. | Fibre Examples (Percent of respective Pulp type in Fibre) | | | | | | | |
|---|---|---|---|---|---|---|---|---|---|---|
| | | | A | G | H | B | F | C | D | Q |
| Pulp type 1 | Xylan, % | 2.6 | 100 | | | | | | | |
| | Mannan, % | 0.7 | | | | | | | | |
| | Tot. Hemicellulose, % | 3.3 | | | | | | | | |
| | R10, % | 82.2 | | | | | | | | |
| | R18, % | 92.7 | | | | | | | | |
| Pulp type 2 | Xylan, % | 7.3 | | 100 | 50 | 20 | | | | |
| | Mannan, % | 5.3 | | | | | | | | |
| | Tot. Hemicellulose, % | 12.6 | | | | | | | | |
| | R10, % | 83.3 | | | | | | | | |
| | R18, % | 89.4 | | | | | | | | |
| Pulp type 3 | Xylan, % | 2.5 | | | 50 | 80 | 100 | 50 | | |
| | Mannan, % | 0.4 | | | | | | | | |
| | Tot. Hemicellulose, % | 2.9 | | | | | | | | |
| | R10, % | 85.9 | | | | | | | | |
| | R18, % | 94.9 | | | | | | | | |
| Pulp type 4 | Xylan, % | 2.4 | | | | | | 50 | 100 | |
| | Mannan, % | 0 | | | | | | | | |
| | Tot. Hemicellulose, % | 2.4 | | | | | | | | |
| | R10, % | 92.6 | | | | | | | | |
| | R18, % | 97.2 | | | | | | | | |
| Pulp type 5 | Xylan, % | 1.6 | | | | | | | | 50 |

(continued)

| | | ref. | Fibre Examples (Percent of respective Pulp type in Fibre) | | | | | | | |
|---|---|---|---|---|---|---|---|---|---|---|
| **Pulp type** | | | **A** | **G** | **H** | **B** | **F** | **C** | **D** | **Q** |
| | Mannan, % | 0.2 | | | | | | | | |
| | Tot. Hemicellulose, % | 1.8 | | | | | | | | |
| | R10, % | 93.6 | | | | | | | | |
| | R18, % | 97.4 | | | | | | | | |
| | Xylan, % | 0.5 | | | | | | | | |
| | Mannan, % | 0 | | | | | | | | |
| Pulp type 6 | Tot. Hemicellulose, % | 0.5 | | | | | | | | 50 |
| | R10, % | 98.6 | | | | | | | | |
| | R18, % | 99.5 | | | | | | | | |
| **Fibre properties:** | | | **A** | **G** | **H** | **B** | **F** | **C** | **D** | **Q** |
| dtex | | | 1.7 | 1.7 | 1.3 | 1.7 | 1.3 | 1.7 | 1.7 | 1.3 |
| length, mm | | | 4 | 5 | 5 | 4 | 5 | 4 | 5 | 5 |
| Xylan, % | | | 2 | 7.3 | 4.3 | 3 | 1.6 | 2.1 | 2.6 | 1.1 |
| Mannan, % | | | 0.2 | 4.9 | 2.3 | 1.6 | 0.2 | 0.2 | 0.1 | 0.1 |
| Tot. Hemicellulose, % | | | 2.2 | 12.2 | 6.6 | 4.6 | 1.8 | 2.3 | 2.7 | 1.2 |
| R10, % | | | 80.1 | 75.2 | 78 | 82.4 | 79.9 | 85.7 | 88.1 | 89.7 |
| R18, % | | | 93.3 | 83.4 | 88.8 | 92.3 | 93.8 | 95.2 | 96.4 | 97.5 |

Accordingly, fibre examples C, D and Q fulfil the requirements according to the present invention. Fibres A, G, H, B and F constitute comparative examples.

Refining

Lyocell fibres were refined with a Valley Beater according to ISO 5264-1.
Pulp fibres were refined with a PFI U3000 mill according to ISO 5264-2.

Paper samples

Paper samples were prepared with a RAPID-KOTHEN sheet former, according to EN ISO 5269/2.
Various papers were manufactured from the fibres as summarized above, optionally in a mixture with other constituents.
The composition of the paper samples as well as the properties determined therein are summarized in the following tables:

Table 2 – Examples according to the invention:

| | | Ex. 1 | Ex. 2 | Ex. 3 | Ex. 4 | Ex. 5 | Ex. 6 | Ex. 7 | Ex. 8 |
|---|---|---|---|---|---|---|---|---|---|
| Paper Composition, % | PVA binder, 1.1 dtex, 3mm | | | | 15 | 15 | 15 | 15 | 15 |
| | PVA fibres, 1.1 dtex, 2mm | | | | 35 | 35 | 35 | 35 | 35 |
| | Eucalyptus pulp (CSF=460ml) | | | | | | | | |
| | Mercerized wood pulp (CSF>700ml) | | | | | | | | |
| | Cotton Linters pulp (CSF>700ml) | | | | | | | | |
| | Viscose fibres, 0.9dtex, 3mm | | | | | | | | |
| | Lyocell Ex. C, 150 ml CSF | 100 | | | 50 | | | 25 | 15 |
| | Lyocell Ex. D, 150 ml CSF | | 100 | | | 50 | | | |
| | Lyocell Ex. Q, >700 ml CSF | | | 100 | | | 50 | | |
| | Lyocell Ex. A, 150 ml CSF | | | | | | | 25 | 35 |
| Paper properties | Basis weight , g/m² | 48 | 46 | 47 | 46 | 46 | 46 | 45 | 45 |
| | Thickness, µm | 107 | 101 | 117 | 123 | 126 | 126 | 119 | 120 |
| | Density, g/cm³ | 0.45 | 0.46 | 0.40 | 0.37 | 0.37 | 0.37 | 0.38 | 0.38 |
| | Porosity, % | 70 | 70 | 73 | 72 | 73 | 73 | 71 | 72 |
| | Weight Reduction rate in KOH, % | 5.7 | 5.6 | 2.6 | 3.3 | 3.7 | 2.0 | 4.6 | 5.2 |
| | Area Shrinkage rate in KOH, % | 3.1 | 2.9 | 4.2 | 1.9 | 1.5 | 2.4 | 1.8 | 1.7 |
| | Frazier Air Permeability, cm³/cm²/sec | 1.8 | 1.2 | 66.0 | 7.2 | 4.4 | 73.0 | 6.3 | 5.0 |

Table 3 – Comparative Examples

| | | Ex. 9 | Ex. 10 | Ex. 11 | Ex. 12 | Ex. 13 | Ex. 14 |
|---|---|---|---|---|---|---|---|
| Paper Composition, % | PVA binder, 1.1 dtex, 3mm | | | 15 | 15 | 15 | 15 |
| | PVA fibres, 1.1 dtex, 2mm | | | 35 | 35 | 35 | 35 |
| | Eucalyptus pulp (CSF=460ml) | | | | 25 | | |
| | Mercerized wood pulp (CSF>700ml) | | | | | | 50 |
| | Cotton Linters pulp (CSF>700ml) | | | | | 50 | |

| | | Ex. 9 | Ex. 10 | Ex. 11 | Ex. 12 | Ex. 13 | Ex. 14 |
|---|---|---|---|---|---|---|---|
| | Viscose fibres, 0.9dtex, 3mm | | | | 25 | | |
| | Lyocell Ex. B, 150 ml CSF | 100 | | | | | |
| | Lyocell Ex. A, 150 ml CSF | | 100 | 50 | | | |
| Paper properties | Basis weight , g/m² | 48 | 48 | 46 | 45 | 46 | 47 |
| | Thickness, μm | 108 | 110 | 121 | 111 | 121 | 120 |
| | Density, g/cm³ | 0.44 | 0.44 | 0.38 | 0.41 | 0.38 | 0.39 |
| | Porosity, % | 70 | 71 | 72 | 70 | 72 | 71 |
| | Weight Reduction rate in KOH, % | 7.1 | 10.0 | 5.9 | 6.9 | 1.2 | 3.6 |
| | Area Shrinkage rate in KOH, % | 2.8 | 3.3 | 1.7 | 9.0 | 8.6 | 3.1 |
| | Frazier Air Permeability, cm³/cm²/sec | 0.7 | 2.1 | 6.8 | 28.0 | 60.0 | 71.0 |

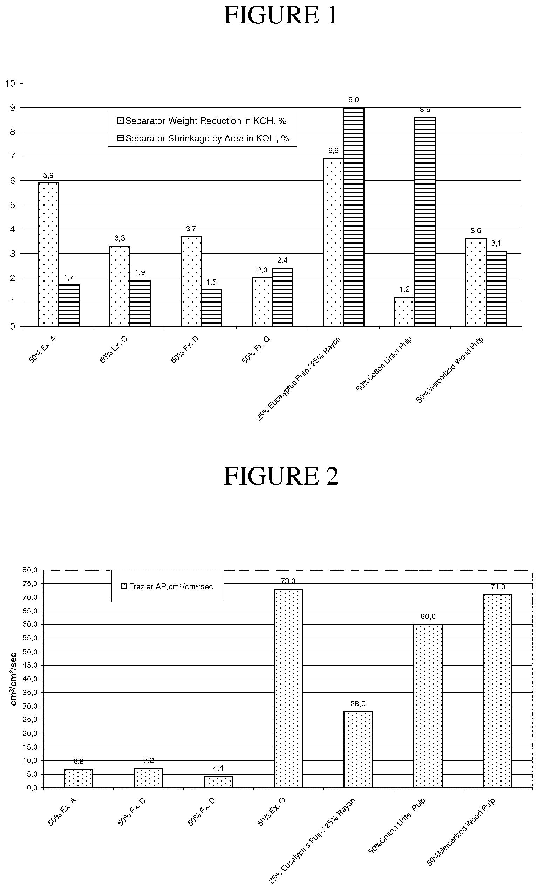

Figures 1 and 2 demonstrate the Alkali Resistance (Figure 1) and Air Permeability (Figure 2) properties of some of the above examples plus some additional comparative examples containing no lyocell fibre.

In each case, the battery separator contained 50% cellulosic component (lyocell fibres according to the present invention, lyocell fibres not according to the present invention or other cellulosic materials such as eucalyptus pulp, rayon, cotton linter pulp and mercerized wood pulp) and 35% PVA fibres as well as 15% PVA binder.

Use of mercerised lyocell fibre

Lyocell fibres produced from the same starting materials and spun under the same conditions as for examples B and C above were mercerised in aqueous NaOH-solutions in the tow form. The fibres were then cut to a length of 3 mm. The mercerisation process employed the following parameters:

Concentration of NaOH (%):    5 - 10 - 15 - 20
Residential time (s):             120 - 240 - 480
Bath temperature (°C):           25

The alkali resistances of the mercerised fibres in terms of R10-value and R18-value were determined.

The respective test regimes and results in terms of R10-value and R18-value are summarized in the following table:

Table 4 - Test Regimes for mercerisation and results

| | | Mercerisation conditions | | | Alkali Resistance | |
|---|---|---|---|---|---|---|
| example | Starting fibers | NaOH concentration (%) | Residential time (s) | Bath Temperature, °C | R10% | R18% |
| C-1-0 | Example C | 0 | 0 | 25 | 85.7 | 95.2 |
| C-1-1 | Example C | 5 | 120 | 25 | 87.0 | 97.0 |
| C-1-2 | Example C | 10 | 120 | 25 | 91.3 | 98.4 |
| C-1-3 | Example C | 15 | 120 | 25 | 94.5 | 98.9 |
| C-1-4 | Example C | 20 | 120 | 25 | 94.5 | 98.7 |

(continued)

| example | Starting fibers | Mercerisation conditions | | | Alkali Resistance | |
|---|---|---|---|---|---|---|
| | | NaOH concentration (%) | Residential time (s) | Bath Temperature, °C | R10% | R18% |
| C-2-4 | Example C | 5 | 240 | 25 | 87.0 | 96.9 |
| C-3-1 | Example C | 10 | 240 | 25 | 93.5 | 98.6 |
| C-2-6 | Example C | 15 | 240 | 25 | 96.5 | 99.3 |
| C-3-2 | Example C | 20 | 240 | 25 | 96.8 | 98.5 |
| C-3-3 | Example C | 5 | 480 | 25 | 87.0 | 96.9 |
| C-3-4 | Example C | 10 | 480 | 25 | 95.3 | 98.6 |
| C-3-5 | Example C | 15 | 480 | 25 | 96.7 | 98.7 |
| C-3-6 | Example C | 20 | 480 | 25 | 96.9 | 98.6 |
| B-4-0 | Example B | 0 | 0 | 25 | 82.4 | 92.3 |
| B-4-1 | Example B | 5 | 240 | 25 | 83.3 | 95.0 |
| B-4-2 | Example B | 10 | 240 | 25 | 93.4 | 97.2 |
| B-4-3 | Example B | 15 | 240 | 25 | 95.4 | 97.7 |
| B-4-4 | Example B | 20 | 240 | 25 | 94.8 | 97.9 |

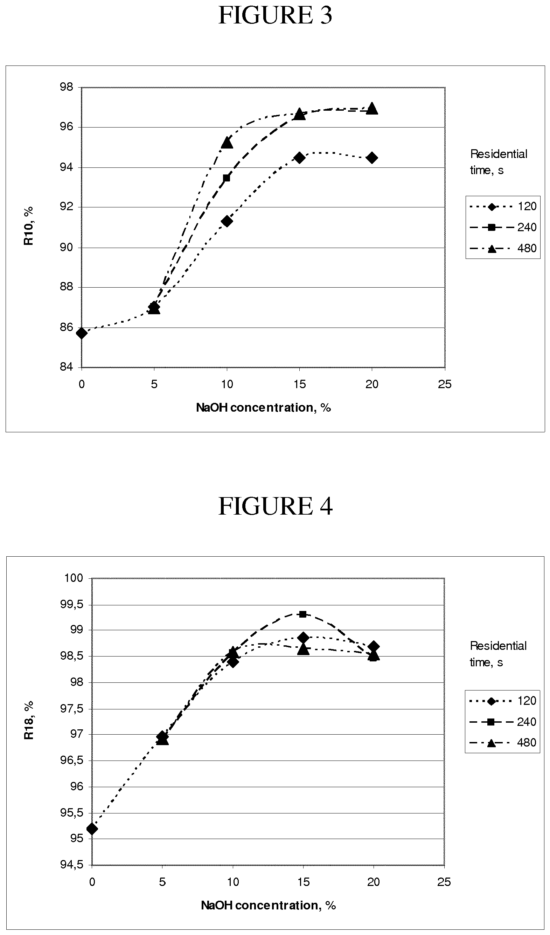

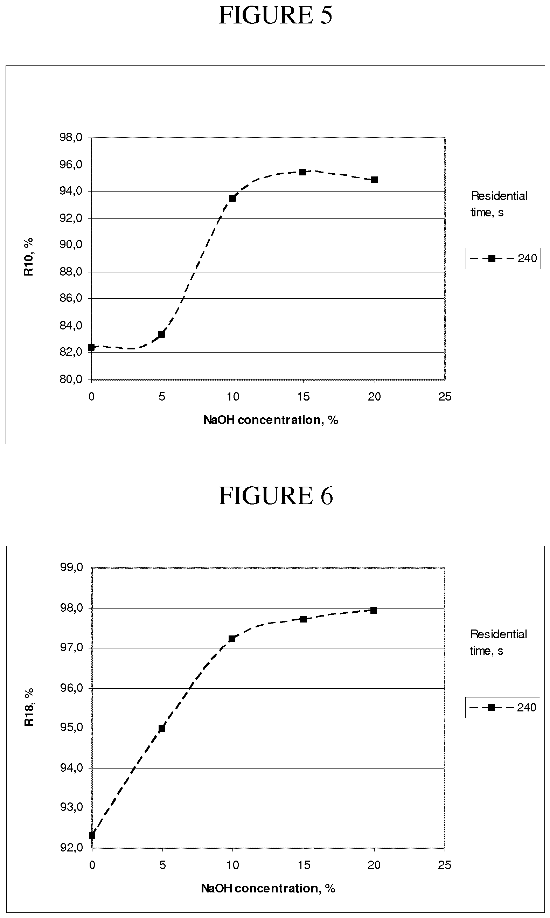

The results are shown graphically in Figure 3 (R10-value) and Figure 4 (R18-value) concerning the fibre of Example C, and Figure 5 (R10-value) and Figure 6 (R18-value concerning the fibre of Example B.

One can see that the R10-values and R18-values of lyocell fibres that already fulfil the requirements of the present invention (Example C) are further enhanced by a mercerisation treatment, and those of lyocell fibres that do not fulfil the requirements of the present invention (Example B) can be increased such as to fulfil the requirements by a mercerisation treatment.

A Schopper-Riegler-test was performed on the unmercerised fibre of Example B and the mercerised fibre according to Example B-4-3 above in a Valley Beater.

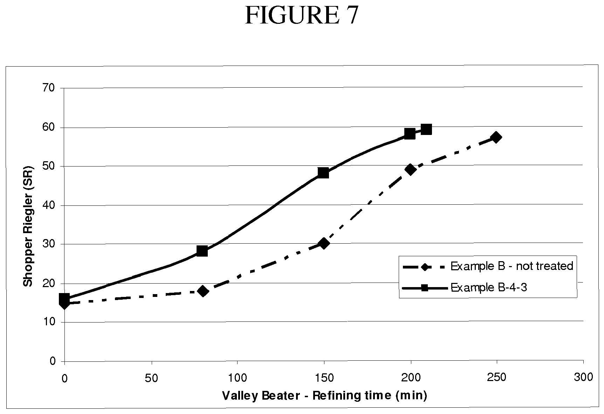

The results of the tests are shown in Figure 7. One can clearly see that the mercerised fibre develops higher Schopper-Riegler-values within a shorter refining time. This means that the mercerised lyocell fibre has a high degree of fibrillation.

Papers were manufactured, as described above, from the mercerised fibres described above, optionally in a mixture with other constituents.

The composition of the paper samples as well as the properties determined therein are summarized in the following tables:

Table 5 – Paper samples

| | | Ex. 15 | Ex. 16 | Ex. 17 | Ex. 18 | Ex. 19 | Ex. 20 | Ex. 21 | Ex. 22 | Ex. 23 | Ex. 24 | Ex. 25 | Ex. 26 | Ex. 27 | Ex. 28 |
|---|---|---|---|---|---|---|---|---|---|---|---|---|---|---|---|
| Paper Composition, % | PVA binder, 1.1dtex, 3mm | | | | | | | | 15 | 15 | 15 | 15 | 15 | 15 | 15 |
| | PVA fibers, 1.1 dtex, 2mm | | | | | | | | 35 | 35 | 35 | 35 | 35 | 35 | 35 |
| | Eucalyptus pulp (CSF=460ml) | | | | | | | | | | | | | | |
| | Mercerized wood pulp (CSF>700ml) | | | | | | | | | | | | | | |
| | Cotton Linters pulp (CSF>700ml) | | | | | | | | | | | | | | |
| | Viscose fibers, 0.9 dtex, 3mm | | | | | | | | | | | | | | |
| | Lyocell example C-1-1, 150 ml CSF | 100 | | | | | | | 50 | | | | | | |
| | Lyocell exampleC-1-3, 150 ml CSF | | 100 | | | | | | | 50 | | | | | |
| | Lyocell example C-2-6, 150 ml CSF | | | 100 | | | | | | | 50 | | | | |
| | Lyocell example C-3-2, 150 ml CSF | | | | 100 | | | | | | | 50 | | | |
| | Lyocell example C-3-4, 150 ml CSF | | | | | 100 | | | | | | | 50 | | |
| | Lyocell example B-4-3, 150 ml CSF | | | | | | 100 | | | | | | | 50 | |
| | Lyocell example B-4-4, 150 ml CSF | | | | | | | 100 | | | | | | | 50 |
| Paper properties | Basis weight, g/m² | 45 | 44 | 46 | 45 | 45 | 43 | 43 | 44 | 45 | 44 | 44 | 42 | 43 | 44 |
| | Thickness, μm | 101 | 99 | 102 | 101 | 108 | 105 | 105 | 124 | 123 | 128 | 123 | 124 | 105 | 123 |
| | Density, g/cm³ | 0.45 | 0.44 | 0.45 | 0.45 | 0.42 | 0.42 | 0.41 | 0.35 | 0.37 | 0.34 | 0.36 | 0.34 | 0.41 | 0.36 |
| | Porosity, % | 67 | 67 | 67 | 67 | 69 | 70 | 70 | 74 | 73 | 75 | 74 | 75 | 70 | 74 |
| | Weight Reduction rate in KOH, % | 5.2 | 5.0 | 3.9 | 2.8 | 3.5 | 5.0 | 3.5 | 2.8 | 3.0 | 2.3 | 1.6 | 2.1 | 2.9 | 1.7 |
| | Area Shrinkage rate in KOH, % | 4 | 2 | 1.4 | 1.7 | 2.4 | 2.7 | 1.2 | 1.9 | 0.9 | 0.6 | 1.1 | 0.9 | 1 | 0.8 |
| | Frazier Air Permeability, cm³/cm²/sec | 2.2 | 1.8 | 3.9 | 1.9 | 4.2 | 3.2 | 1.6 | 5.6 | 6.1 | 9.2 | 12.3 | 14.3 | 25.2 | 13.6 |

## Table 6 – Comparison Examples

| | | Ex. 29 | Ex. 30 | Ex. 31 | Ex. 32 | Ex. 33 |
|---|---|---|---|---|---|---|
| Paper Composition, % | PVA binder, 1.1 dtex, 3mm | 15 | 15 | 15 | 15 | 15 |
| | PVA fibers, 1.1 dtex, 2mm | 35 | 35 | 35 | 35 | 35 |
| | Eucalyptus pulp (CSF=460ml) | | | 25 | | |
| | Mercerized wood pulp (CSF>700ml) | | | | | 50 |
| | Cotton Linters pulp (CSF>700ml) | | | | 50 | |
| | Viscose fibers, 0.9 dtex, 3mm | | | 25 | | |
| | Lyocell Example B – Not Mercerised, 150 CSF | 50 | | | | |
| | Lyocell Example C – Not Mercerised, 150 CSF | | 50 | | | |
| Paper properties | Basis weight, g/m² | 46 | 45 | 45 | 46 | 47 |
| | Thickness, μm | 118 | 117 | 111 | 121 | 120 |
| | Density, g/cm³ | 0,38 | 0,4 | 0,41 | 0,38 | 0,39 |
| | Porosity, % | 70 | 72 | 70 | 72 | 71 |
| | Weight Reduction rate in KOH, % | 5.1 | 3.5 | 6.9 | 1.2 | 3.6 |
| | Area Shrinkage rate in KOH, % | 1.9 | 1.8 | 9 | 8.6 | 3.1 |
| | Frazier Air Permeability, cm³/cm²/sec | 7.2 | 8.7 | 28 | 60 | 71 |

Comparing Comparison Example 29 with Inventive Examples 27 and 28 and Comparison Example 30 with Inventive Examples 22 to 26, respectively, there is a (further) remarkable reduction in the Weight Reduction rate in KOH obtained by employing mercerised lyocell fibre instead of non-mercerised lyocell fibre.

**Claims**

1. A battery separator, comprising cellulosic fibres of the lyocell genus, wherein the R10-value, the R18-value, which are determined according to DIN 54355, and the hemicellulose content of the lyocell fibres is as follows:

    R10 > 83 wt.-% preferably > 84 wt.-%
    R18 > 93 wt.-%, preferably > 94 wt.-%
    Hemicellulose content < 3 wt.-%.

2. Battery separator according to claim 1, wherein the R10-value, the R18-value and the hemicellulose content of the lyocell fibres is as follows:

    R10 > 89 wt.-%
    R18 > 97 wt.-%
    Hemicellulose content < 2 wt.-%.

3. Battery separator according to claim 1 or 2, **characterized in that** the separator comprises a mixture of lyocell fibres exhibiting the R10-values, R18-values and hemicellulose content as defined in claim 1 or 2.

4. Battery separator according to any of the preceding claims, **characterized in that** the amount of said lyocell fibres in the separator is from 1% to 100%, preferably 15% or more, 25% or more, 40% or more, or 50% or more.

5. Battery separator according to any of the preceding claims, **characterized in that** it exhibits a Reduction by Weight in KOH, as described in the description, of < 6.0%, preferably 5.5% or less, more preferably 5% or less, most preferably 4% or less.

6. Battery separator according to any of the preceding claims, **characterized in that** it exhibits a Reduction by Area in KOH, as described in the description, of < 4.5%, preferably 3.5% or less, most preferably 2% or less.

7. Battery separator according to any of the preceding claims, **characterized in that** it exhibits a Frazier Air Permeability, which is determined according to JIS 1096-6,27, of < 50 $cm^3/cm^2/s$, preferably 20 $cm^3/cm^2/s$, most preferred from 3.5 $cm^3/cm^2/s$ to 15 $cm^3/cm^2/s$.

8. The use of a cellulosic fibre of the lyocell genus, said fibre exhibiting the following values for R10 and R18, which are determined according to DIN 54355, and hemicellulose content:

    - a value for R10 > 83 wt.-%, preferably > 84wt.-%
    - a value for R18 > 93 wt.-%, preferably > 94wt.-%
    - a hemicellulose content < 3 wt.-%, in a battery separator.

9. A battery, preferably an alkaline battery, comprising the battery separator according to any of claims 1-7.

**Patentansprüche**

1. Batterieseparator, umfassend Cellulosefasern der Lyocell-Gattung, wobei der R10-Wert, der R18-Wert, die gemäß DIN 54355 bestimmt werden, und der Hemicellulosegehalt der Lyocellfasern wie folgt sind:

    R10 > 83 Gew.-%, vorzugsweise > 84 Gew.-%
    R18 > 93 Gew.-%, vorzugsweise > 94 Gew.-%
    Hemicellulosegehalt < 3 Gew.-%.

2. Batterieseparator gemäß Anspruch 1, wobei der R10-Wert, der R18-Wert und der Hemicellulosegehalt der Lyocellfasern wie folgt sind:

R10 > 89 Gew.-%
R18 > 97 Gew.-%
Hemicellulosegehalt < 2 Gew.-%.

**3.** Batterieseparator gemäß Anspruch 1 oder 2, **dadurch gekennzeichnet, dass** der Separator ein Gemisch von Lyocellfasern umfasst, welche die R10-Werte, R18-Werte und den Hemicellulose-Gehalt aufweisen, die in Anspruch 1 oder 2 definiert sind.

**4.** Batterieseparator gemäß einem der vorhergehenden Ansprüche, **dadurch gekennzeichnet, dass** die Menge der Lyocellfasern in dem Separator 1% bis 100%, vorzugsweise 15% oder mehr, 25% oder mehr, 40% oder mehr oder 50 % oder mehr beträgt.

**5.** Batterieseparator gemäß einem der vorhergehenden Ansprüche, **dadurch gekennzeichnet, dass** er eine Gewichtsreduktion in KOH, wie in der Beschreibung dargelegt, von < 6,0%, vorzugsweise 5,5% oder weniger, stärker bevorzugt 5% oder weniger, am bevorzugtesten 4% oder weniger aufweist.

**6.** Batterieseparator gemäß einem der vorhergehenden Ansprüche, **dadurch gekennzeichnet, dass** er eine Flächenreduktion in KOH, wie in der Beschreibung dargelegt, von < 4,5%, vorzugsweise 3,5% oder weniger, am meisten bevorzugt 2% oder weniger aufweist.

**7.** Batterieseparator gemäß einem der vorhergehenden Ansprüche, **dadurch gekennzeichnet, dass** er eine Luftdurchlässigkeit nach Frazier, die gemäß JIS 1096-6,27 festgelegt ist, von < 50 cm$^3$/cm$^2$/s, vorzugsweise 20 cm$^3$/cm$^2$/s, am meisten bevorzugt von 3,5 cm$^3$/cm$^2$/s bis 15 cm$^3$/cm$^2$/s aufweist.

**8.** Verwendung einer Cellulosefaser der Lyocell-Gattung, wobei die Faser die folgenden Werte für R10 und R18, die gemäß DIN 54355 bestimmt werden, und den folgenden Hemicellulosegehalt in einem Batterieseparator aufweist:

- einen Wert für R10 > 83 Gew.-%, vorzugsweise > 84 Gew.-%
- einen Wert für R18 > 93 Gew.-%, vorzugsweise > 94 Gew.-%
- einen Hemicellulosegehalt < 3 Gew.-%.

**9.** Batterie, vorzugsweise eine Alkalibatterie, umfassend den Batterieseparator gemäß einem der Ansprüche 1-7.

**Revendications**

**1.** Séparateur de batterie, comprenant des fibres cellulosiques du genre lyocell, dans lequel la valeur R10, la valeur R18, qui sont déterminées selon la norme DIN 54335, et la teneur en hémicellulose des fibres lyocell est la suivante:

R10 > 83 % en poids, de préférence > 84 % en poids
R18 > 93 % en poids, de préférence > 94 % en poids
teneur en hémicellulose < 3 % en poids.

**2.** Séparateur de batterie selon la revendication 1, dans lequel la valeur R10, la valeur R18 et la teneur en hémicellulose des fibres lyocell est la suivante:

R10 > 89 % en poids
R18 > 97 % en poids
teneur en hémicellulose < 2 % en poids.

**3.** Séparateur de batterie selon la revendication 1 ou 2, **caractérisé en ce que** le séparateur comprend un mélange de fibres lyocell qui présentent les valeurs R10, les valeurs R18 et la teneur en hémicellulose selon la revendication 1 ou 2.

**4.** Séparateur de batterie selon l'une quelconque des revendications précédentes, **caractérisé en ce que** la quantité desdites fibres lyocell dans le séparateur est comprise entre 1 % et 100 %, de préférence de 15 % ou plus, de 25 % ou plus, de 40 % ou plus, ou de 50 % ou plus.

**5.** Séparateur de batterie selon l'une quelconque des revendications précédentes, **caractérisé en ce qu'**il présente une réduction en poids dans le KOH, comme cela est décrit dans la description, < 6,0 %, de préférence de 5,5 % ou moins, mieux encore de 5 % ou moins, idéalement de 4 % ou moins.

**6.** Séparateur de batterie selon l'une quelconque des revendications précédentes, **caractérisé en ce qu'**il présente une réduction en poids dans le KOH, comme cela est décrit dans la description, < 4,5 %, de préférence de 3,5 % ou moins, idéalement de 2 % ou moins.

**7.** Séparateur de batterie selon l'une quelconque des revendications précédentes, **caractérisé en ce qu'**il présente une perméabilité à l'air Frazier, qui est déterminée selon la norme JIS 1096-6.27, < 50 cm3/cm2/s, de préférence de 20 cm3/cm2/s, idéalement comprise entre 3,5 cm3/cm2/s et 15 cm3/cm2/s.

**8.** Utilisation d'une fibre cellulosique du genre lyocell, ladite fibre présentant les valeurs suivantes pour R10 et R18, qui sont déterminées selon la norme DIN 54335, et une teneur en hémicellulose

   - une valeur pour R10 > 83 % en poids, de préférence > 84 % en poids
   - une valeur pour R18 > 93 % en poids, de préférence > 94 % en poids
   - une teneur en hémicellulose < 3 % en poids, dans un séparateur de batterie.

**9.** Batterie, de préférence batterie alcaline, comprenant le séparateur de batterie selon l'une quelconque des revendications 1 à 7.

# FIGURE 1

# FIGURE 2

# FIGURE 3

# FIGURE 4

# FIGURE 5

# FIGURE 6

# FIGURE 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0572921 A1
- US 20070014080 A1
- US 20100310921 A
- US 20090017385 A1
- WO 9737392 A
- US 5700700 A
- DE 19855644
- WO 2007041312 A
- WO 95024524 A1
- US 7781104 B2
- US 2012028103 A1
- US 20110117413 A1
- US 20090312536 A1
- WO 2005118950 A

### Non-patent literature cited in the description

- **STANA-KLEINSCHEK et al.** Correlation of regenerated cellulose fibres morphology and surface free energy components. *Lenzinger Berichte,* 2003, vol. 82, 83-95
- **COLOM, X. ; CARRILLO, F.** Crystallinity changes in lyocell and viscose-type fibres by caustic treatment. *Europ. Polymer J.,* 2002, vol. 38, 2225-2230